# EUROPEAN PATENT SPECIFICATION

(11) **EP 4 047 888 B1**
(45) Date of publication and mention of the grant of the patent: **30.10.2024**
(21) Application number: 20889871.8
(22) Date of filing: 28.07.2020
(51) Int. Cl.: H04L 41/022, H04L 41/0806, H04L 41/0853, H04L 45/03, H04L 45/033, H04L 45/12, H04L 45/42, H04L 45/00, H04L 41/12, H04L 43/08

(54) **METHOD FOR ISSUING OAM CONFIGURATION INFORMATION AND CONTROL NODE**
VERFAHREN ZUR AUSGABE VON OAM-KONFIGURATIONSINFORMATIONEN UND STEUERKNOTEN
PROCÉDÉ D'ÉMISSION D'INFORMATIONS DE CONFIGURATION OAM ET NOEUD DE COMMANDE

(30) Priority: 19.11.2019 CN 201911135733
(43) Date of publication of application: 24.08.2022
(73) Proprietor: Huawei Technologies Co., Ltd., Shenzhen, Guangdong 518129 (CN)
(72) Inventor: ZHOU, Tianran, Shenzhen, Guangdong 518129 (CN); XU, Ling, Shenzhen, Guangdong 518129 (CN); LIU, Min, Shenzhen, Guangdong 518129 (CN); LI, Zhenbin, Shenzhen, Guangdong 518129 (CN)
(74) Representative: Grünecker Patent- und Rechtsanwälte PartG mbB
(86) International application number: PCT/CN2020/105085
(87) International publication number: WO 2021/098271

(56) References cited:
- WO-A1-2018/188663
- CN-A- 101 945 018
- CN-A- 108 737 127
- CN-A- 108 964 943
- US-A1- 2019 182 124
- BROCKNERS S BHANDARI CISCO D BERNIER BELL CANADA F: "In-situ OAM Deployment; draft-brockners-opsawg-ioam-deployment-00.txt", 30 October 2019 (2019-10-30), pages 1 - 22, XP015135861, Retrieved from the Internet <URL:https://tools.ietf.org/html/draft-brockners-opsawg-ioam-deployment-00> [retrieved on 20191030]

## Description

### TECHNICAL FIELD

This application relates to the field of routing technologies, and in particular, to a method for delivering OAM configuration information and a control node.

### BACKGROUND

In an in-situ operations, administration and maintenance (in-site operation administration and maintenance, iOAM) technology, a head node sends data collection instructions to a tail node hop by hop, and a node at each hop collects detection data based on the data collection instructions. A control node in a network analyzes the detection data collected by each node to detect a path between the head node and the tail node. Types of detection data that needs to be collected are different in different path detection modes. For example, when a path detection mode is to analyze a path topology between the head node and the tail node, a type of the detection data may be information about an interface for packet sending and receiving. For another example, when a path detection mode is to analyze a transmission delay between the head node and the tail node, a type of the detection data is information about a time stamp for packet sending and receiving. In addition, to implement a path detection mode, after determining the path detection mode that needs to be performed, the control node needs to deliver OAM configuration information to a node between the head node and the tail node, such as the head node or the tail node. The OAM configuration information is used to indicate some operations that need to be performed by the node when the path detection mode is used.

In the foregoing manner, if the node does not support the path detection mode, after the control node delivers the OAM configuration information to the node, the node cannot successfully perform path detection based on the OAM configuration information, and this may cause a failure of detection of the path between the head node and the tail node. Document WO 2018/188663A1 represents a relevant piec of prior art.

### SUMMARY

This application provides a method for delivering OAM configuration information and a control node, to improve a success rate of path detection. Technical solutions are as follows.

According to a first aspect, a method for delivering OAM configuration information is provided. In the method, a control node obtains advertisement packets sent by at least two nodes in a plurality of nodes included in a communication network. The advertisement packet includes indication information used to indicate a path detection mode supported by the sender of the advertisement packet. Therefore, the control node may determine a detection path based on a path detection mode that needs to be used and the advertisement packets sent by the at least two nodes, and deliver OAM configuration information to nodes, for example, a head node and a tail node, in the determined detection path.

In this embodiment of this application, to avoid a case in which after the control node delivers OAM configuration information to a node, the node cannot successfully perform path detection based on the OAM configuration information because the node does not support a path detection mode that needs to be used currently, a node in the communication network may send an advertisement packet to the control node in advance, where the advertisement packet includes indication information used to indicate a path detection mode supported by the sender of the advertisement packet. In this way, the control node may learn of nodes that are in the communication network and that can support the path detection mode that needs to be used currently. In this case, the control node may determine a detection path based on the nodes that can support the path detection mode that needs to be used currently. In this way, after OAM configuration information is sent to a head node and a tail node in the detection path, because the head node and the tail node are nodes that can support the path detection mode that needs to be used, it is ensured that the head node and the tail node can successfully perform path detection based on the OAM configuration information.

The control node determines a detection path based on a path detection mode that needs to be used and the advertisement packets sent by the at least two nodes is specifically: determining the head node and the tail node in the detection path based on nodes that are in the at least two nodes and that support the path detection mode that needs to be used.

In an implementation, the control node only needs to determine the head node and the tail node that perform path detection, so that the head node and the tail node can implement path detection based on the OAM configuration information subsequently.

Optionally, in the method, the control node may further determine one or more intermediate nodes in the detection path based on the nodes that are in the at least two nodes and that support the path detection mode that needs to be used. In this case, the control node may further deliver OAM configuration information to each of the one or more intermediate nodes.

In another implementation, after determining the head node and the tail node that perform path detection, the control node may further determine the intermediate node, and deliver the OAM configuration information to the intermediate node, so that the intermediate node subsequently implements path detection based on the OAM configuration information.

Optionally, the advertisement packet further includes indication information used to indicate a type of detection data corresponding to the path detection mode supported by the sender of the advertisement packet. In this scenario, the determining the head node and the tail node in the detection path based on nodes that are in the at least two nodes and that support the path detection mode that needs to be used is specifically: determining a type of detection data that needs to be collected; and determining the head node and the tail node in the detection path based on nodes that are in the at least two nodes, that support the path detection mode that needs to be used, and whose advertisement packets indicate types of detection data that are consistent with the type of the detection data that needs to be collected.

To further improve a success rate of path detection, the advertisement packet may further include the indication information used to indicate the type of the detection data corresponding to the path detection mode supported by the sender of the advertisement packet. In this way, the control node learns of path detection that can be supported by each node, and may further learn of a type of detection data that can be collected by each node in the path detection mode that can be supported by each node, to facilitate determining nodes that can be used to determine the detection path.

The advertisement packet further includes indication information used to indicate a type of a protocol used when a packet header carrying data detection instructions is encapsulated into a packet that is for path detection. In this scenario, the control node further determines a type of a protocol used when a packet header carrying data detection instructions is encapsulated into the packet that is for path detection. For a node that corresponds to the determined protocol type that is consistent with the protocol type indicated in the advertisement packet, the step of determining the head node and the tail node in the detection path based on the nodes that are in the at least two nodes and that support the path detection mode that needs to be used is performed.

To further improve the success rate of path detection, the advertisement packet further includes the indication information used to indicate the type of the protocol used when the packet header carrying the data detection instructions is encapsulated into the packet that is for path detection. In this case, when determining a candidate node of the detection path, it further needs to be ensured that a type of a protocol indicated in an advertisement packet of the candidate node is consistent with the type of the protocol used when the packet header that carries the data detection instructions is encapsulated into a packet that is currently used for path detection. Therefore, a success rate of encapsulating the packet header by the head node is improved subsequently.

Optionally, the advertisement packet further includes indication information used to indicate that a type of the advertisement packet is an OAM capability advertisement packet.

In this case, the control node may directly obtain, based on the type of the advertisement packet, that the advertisement packet is used to advertise the path detection mode that can be supported by the node, so that efficiency of delivering the OAM configuration information is improved.

Optionally, when a communication protocol used by any one of the at least two nodes is an open shortest path first OSPF protocol, the advertisement packet is a packet based on a router information link state advertisement RI LSA.

Optionally, when a communication protocol used by any one of the at least two nodes is an intermediate system to intermediate system ISIS protocol, the advertisement packet is a packet based on a TLV 242.

Optionally, when a communication protocol used by any one of the at least two nodes is a border gateway protocol BGP, the advertisement packet is a packet based on an opaque node attribute TLV.

When a communication protocol used by any node is a different communication protocol, an existing packet may be used to implement a function of the advertisement packet provided in this embodiment of this application, so that compatibility between the advertisement packet provided in this embodiment of this application and an existing protocol is improved.

Optionally, the OAM configuration information delivered to the head node includes first access control list ACL configuration instructions, and the first ACL configuration instructions include an identifier of a to-be-encapsulated packet and specific content encapsulated into the packet. The OAM configuration information delivered to the tail node includes second ACL configuration instructions, and the second ACL configuration instructions include an identifier of a to-be-decapsulated packet. Therefore, the head node or the tail node subsequently performs path detection based on the OAM configuration information.

According to a second aspect, a method for delivering OAM configuration information is provided. The method is applied to a first node in a communication network, the communication network includes a control node and a plurality of nodes, and the first node is one of the plurality of nodes. In the method, the first node sends an advertisement packet to the control node, where the advertisement packet includes indication information used to indicate a path detection mode supported by the first node, to enable the control node to determine a detection path based on the advertisement packet.

The advertisement packet further includes indication information used to indicate a type of detection data corresponding to the path detection mode supported by the first node.

The advertisement packet further includes indication information used to indicate a type of a protocol used when a packet header carrying data detection instructions is encapsulated into a packet that is for path detection.

Optionally, the advertisement packet further includes indication information used to indicate that a type of the advertisement packet is an OAM capability advertisement packet.

Optionally, when a communication protocol used by the first node is an open shortest path first OSPF protocol, the advertisement packet is a packet based on a router information link state advertisement RI LSA.

Optionally, when a communication protocol used by the first node is an intermediate system to intermediate system ISIS protocol, the advertisement packet is a packet based on a TLV 242.

Optionally, when a communication protocol used by the first node is a border gateway protocol BGP, the advertisement packet is a packet based on an opaque node attribute TLV.

For beneficial effects of the foregoing technical solutions provided in the second aspect, refer to beneficial effects of the technical solutions for delivering OAM configuration information provided in the first aspect. Details are not described herein again.

According to a third aspect, a control node is provided. The control node is a control node in a communication network, the communication network further includes a plurality of nodes, and the control node includes:
an obtaining module, configured to obtain advertisement packets sent by at least two of the plurality of nodes, where the advertisement packet includes indication information used to indicate a path detection mode supported by the sender of the advertisement packet;
a determining module, configured to determine a detection path based on a path detection mode that needs to be used and the advertisement packets sent by the at least two nodes; and
a delivering module, configured to deliver OAM configuration information to a head node and a tail node in the detection path.

The determining module is specifically configured to:
determine the head node and the tail node in the detection path based on nodes that are in the at least two nodes and that support the path detection mode that needs to be used.

Optionally, the determining module is further specifically configured to:
determine one or more intermediate nodes in the detection path based on the nodes that are in the at least two nodes and that support the path detection mode that needs to be used. In this case, the delivering module is further configured to deliver OAM configuration information to the one or more intermediate nodes in the detection path.

Optionally, the advertisement packet further includes indication information used to indicate a type of detection data corresponding to the path detection mode supported by the sender of the advertisement packet.

The determining module is specifically configured to:
determine a type of detection data that needs to be collected; and
determine the head node and the tail node in the detection path based on nodes that are in the at least two nodes, that support the path detection mode that needs to be used, and whose advertisement packets indicate types of detection data that are consistent with the type of the detection data that needs to be collected.

The advertisement packet further includes indication information used to indicate a type of a protocol used when a packet header carrying data detection instructions is encapsulated into a packet that is for path detection.

The determining module is specifically configured to:
determine a type of a protocol used when a packet header carrying data detection instructions is encapsulated into the packet that is for path detection; and
for nodes whose advertisement packets indicate types of protocols that are consistent with the determined protocol type, perform the step of determining the head node and the tail node in the detection path based on the nodes that are in the at least two nodes and that support the path detection mode that needs to be used.

Optionally, the advertisement packet further includes indication information used to indicate that a type of the advertisement packet is an OAM capability advertisement packet.

Optionally, when a communication protocol used by any one of the at least two nodes is an open shortest path first OSPF protocol, the advertisement packet is a packet based on a router information link state advertisement RI LSA.

Optionally, when a communication protocol used by any one of the at least two nodes is an intermediate system to intermediate system ISIS protocol, the advertisement packet is a packet based on a TLV 242.

Optionally, when a communication protocol used by any one of the at least two nodes is a border gateway protocol BGP, the advertisement packet is a packet based on an opaque node attribute TLV.

Optionally, the OAM configuration information delivered to the head node includes first access control list ACL configuration instructions, where the first ACL configuration instructions include an identifier of a to-be-encapsulated packet and specific content encapsulated into the packet; and
the OAM configuration information delivered to the tail node includes second ACL configuration instructions, and the second ACL configuration instructions include an identifier of a to-be-decapsulated packet.

According to a fourth aspect, a first node in a communication network is provided. The communication network includes a control node and a plurality of nodes, and the first node is one of the plurality of nodes. The first node includes:
a sending module, configured to send an advertisement packet to the control node, where the advertisement packet includes indication information used to indicate a path detection mode supported by the first node, to enable the control node to determine a detection path based on the advertisement packet.

The advertisement packet further includes indication information used to indicate a type of detection data corresponding to the path detection mode supported by the first node.

The advertisement packet further includes indication information used to indicate a type of a protocol used when a packet header carrying data detection instructions is encapsulated into a packet that is for path detection.

Optionally, the advertisement packet further includes indication information used to indicate that a type of the advertisement packet is an OAM capability advertisement packet.

Optionally, when a communication protocol used by the first node is an open shortest path first OSPF protocol, the advertisement packet is a packet based on a router information link state advertisement RI LSA.

Optionally, when a communication protocol used by the first node is an intermediate system to intermediate system ISIS protocol, the advertisement packet is a packet based on a TLV 242.

Optionally, when a communication protocol used by the first node is a border gateway protocol BGP, the advertisement packet is a packet based on an opaque node attribute TLV.

According to a fifth aspect, a control node in a communication network is provided. The control node includes a memory and a processor, where
the memory is configured to store a computer program; and
the processor is configured to execute the computer program stored in the memory to perform the method according to any one of the first aspect.

According to a sixth aspect, a first node in a communication network is provided. The communication network includes a control node and a plurality of nodes, the first node is one of the plurality of nodes, and the first node includes a memory and a processor, where
the memory is configured to store a computer program; and
the processor is configured to execute the computer program stored in the memory to perform the method according to any one of the second aspect.

According to a seventh aspect, a chip is provided. The chip is disposed in a control node in a communication network, and the chip includes a processor and an interface circuit, where
the interface circuit is configured to: receive instructions and transmit the instructions to the processor; and
the processor is configured to perform the method according to any one of the first aspect.

According to a seventh aspect, a chip is provided. The chip is disposed in a first node in a communication network, the communication network includes a control node and a plurality of nodes, the first node is one of the plurality of nodes, and the chip includes a processor and an interface circuit, where
the interface circuit is configured to: receive instructions and transmit the instructions to the processor; and
the processor is configured to perform the method according to any one of the second aspect.

According to an eighth aspect, a system for delivering OAM configuration information is provided. The system includes a control node and a plurality of nodes, where
a first node in the plurality of nodes is configured to send an advertisement packet to the control node, where the advertisement packet includes indication information used to indicate a path detection mode supported by the first node; and
the control node is configured to receive the advertisement packet sent by the first node, to determine a detection path based on the advertisement packet.

The advertisement packet further includes indication information used to indicate a type of detection data corresponding to the path detection mode supported by the first node.

The advertisement packet further includes indication information used to indicate a type of a protocol used when a packet header carrying data detection instructions is encapsulated into a packet that is for path detection.

Optionally, the advertisement packet further includes indication information used to indicate that a type of the advertisement packet is an OAM capability advertisement packet.

Optionally, when a communication protocol used by the first node is an open shortest path first OSPF protocol, the advertisement packet is a packet based on a router information link state advertisement RI LSA.

Optionally, when a communication protocol used by the first node is an intermediate system to intermediate system ISIS protocol, the advertisement packet is a packet based on a TLV 242.

Optionally, when a communication protocol used by the first node is a border gateway protocol BGP, the advertisement packet is a packet based on an opaque node attribute TLV.

### BRIEF DESCRIPTION OF DRAWINGS

FIG. 1 is a schematic diagram of an iOAM trace mode according to an embodiment of this application;
FIG. 2 is a schematic diagram of an iOAM E2E mode according to an embodiment of this application;
FIG. 3 is a schematic diagram of an iOAM postcard mode according to an embodiment of this application;
FIG. 4 is a flowchart of a method for delivering OAM configuration information according to an embodiment of this application;
FIG. 5 is a schematic diagram of a format of an RI LSA according to an embodiment of this application;
FIG. 6 is a schematic diagram of a format of a TLV 242 according to an embodiment of this application;
FIG. 7 is a schematic diagram of a format of an opaque node attribute TLV according to an embodiment of this application;
FIG. 8 is a schematic diagram of a structure of a network device according to an embodiment of this application;
FIG. 9 is a schematic diagram of a structure of another network device according to an embodiment of this application;
FIG. 10 is a schematic diagram of a structure of an interface board in the network device shown in FIG. 9 according to an embodiment of this application;
FIG. 11 is a schematic diagram of a structure of a control node according to an embodiment of this application;
FIG. 12 is a schematic diagram of a structure of a first node according to an embodiment of this application; and
FIG. 13 is a schematic diagram of a structure of a network device according to an embodiment of this application.

### DESCRIPTION OF EMBODIMENTS

To make objectives, technical solutions, and advantages of this application clearer, the following further describes implementations of this application in detail with reference to the accompanying drawings.

It should be understood that "a plurality of' in this specification means two or more than two. In description of this application, "/" means "or" unless otherwise specified. For example, A/B may represent A or B. In this specification, "and/or" describes only an association relationship for describing associated objects and represents that three relationships may exist. For example, A and/or B may represent the following three cases: Only A exists, both A and B exist, and only B exists. In addition, to clearly describe the technical solutions in embodiments of this application, terms such as "first" and "second" are used in the embodiments of this application to distinguish between same items or similar items that provide basically same functions or purposes. A person skilled in the art may understand that the terms such as "first" and "second" do not limit a quantity and an execution sequence, and the terms such as "first" and "second" do not indicate a definite difference.

Before the embodiments of this application are described in detail, an application scenario in the embodiments of this application is first described.

An iOAM technology is a telemetry (telemetry) technology used on a data plane. In the iOAM technology, data collection instructions are carried in a service packet, and there are a lot of advantages compared with a conventional OAM technology (where a detection packet that includes data collection instructions is regenerated rather than carried in the service packet). In the conventional OAM technology, there are many problems, such as inaccurate measurement, insufficient information, and difficult verification. The iOAM technology resolves these problems. As a network scale expands and bearer services become more complex, the iOAM technology develops rapidly, and has become one of hotspots of the internet engineering task force internet protocol performance metrics (the internet engineering task force internet protocol performance metrics, IETF ippm). Currently, the IETF ippm provides a plurality of path detection modes for different application scenarios. The path detection modes are also called iOAM modes (type), and are used to resolve different problems. For example, an iOAM trace mode (trace type) is proposed for path tracing; an iOAM E2E mode is proposed for an end-to-end (endpoint to endpoint, E2E) packet loss rate and delay; an iOAM postcard mode (postcard type) is proposed for packet loss locating.

For ease of subsequent description, several common path detection modes are described as follows.

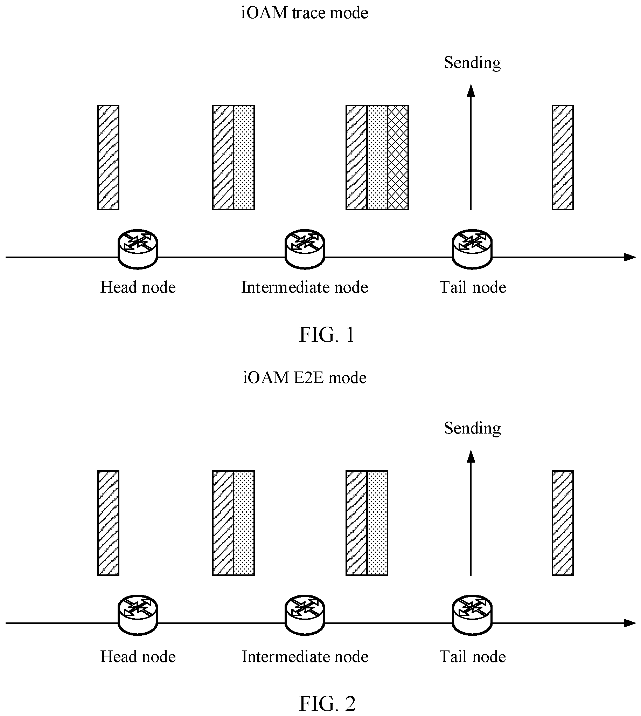

FIG. 1 is a schematic diagram of an iOAM trace mode according to an embodiment of this application. As shown in FIG. 1, a head node is configured to encapsulate an iOAM header into a specified packet, where the iOAM header includes data collection instructions and detection data collected by the head node (where a rectangular filled with diagonal stripes in FIG. 1 is used to indicate the specified packet, and a rectangular filled with dots in FIG. 1 is used to indicate the iOAM header). Each intermediate node (where in FIG. 1, only one intermediate node is used as an example for description) is configured to: collect detection data along a path hop by hop based on the data collection instructions (where a rectangular filled with squares in FIG. 1 is used to indicate the collected detection data) and record the collected detection data in the iOAM header. A tail node is configured to: decapsulate the iOAM header, restore the specified packet, and continue transmitting the specified packet. In addition, the tail node further needs to send, based on the iOAM header, the detection data collected by each node, to a server or a control manager.

FIG. 2 is a schematic diagram of an iOAM E2E mode according to an embodiment of this application. As shown in FIG. 2, a head node is configured to encapsulate an iOAM header into a specified packet, where the iOAM header includes data collection instructions and detection data collected by the head node (where a rectangular filled with diagonal stripes in FIG. 2 is used to indicate the specified packet, and a rectangular filled with dots in FIG. 2 is used to indicate the iOAM header). In the iOAM E2E mode, an intermediate node does not need to collect the detection data, but only the head node and a tail node need to collect the detection data. Therefore, the intermediate node only needs to continue transmitting the specified packet that is sent by the head node and encapsulated with the iOAM header. After collecting the detection data based on the data collection instructions, the tail node decapsulates the iOAM header, restores the specified packet, and continues transmitting the specified packet. In addition, the tail node further needs to send, based on the iOAM header, the detection data collected by the head node and the detection data collected by the tail node.

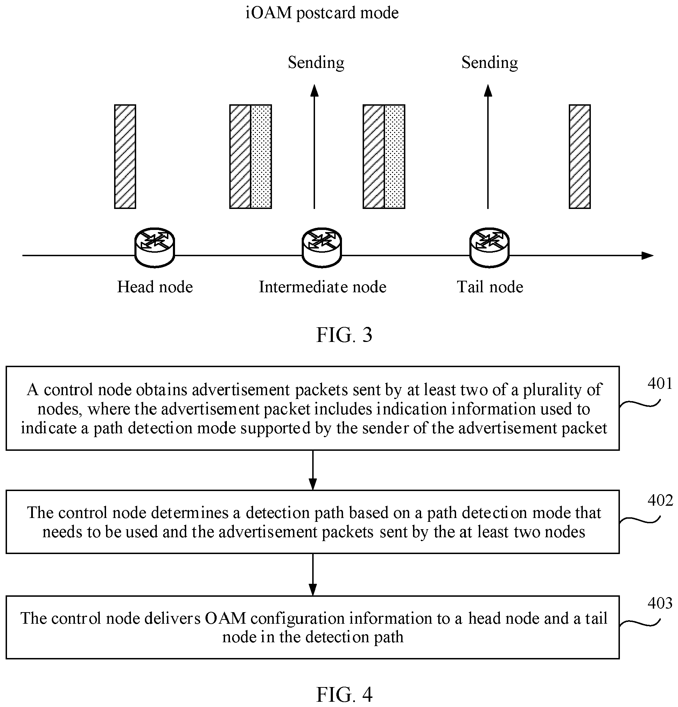

FIG. 3 is a schematic diagram of an iOAM postcard mode according to an embodiment of this application. As shown in FIG. 3, a head node is configured to encapsulate an iOAM header into a specified packet, where the iOAM header includes data collection instructions and detection data collected by the head node (where a rectangular filled with diagonal stripes in FIG. 3 is used to indicate the specified packet, and a rectangular filled with dots in FIG. 3 is used to indicate the iOAM header). Each intermediate node (where in FIG. 3, only one intermediate node is used as an example for description) is configured to: decapsulate the iOAM header and send detection data collected by a previous-hop node; and collect detection data along a path hop by hop based on the data collection instructions (where a rectangular filled with squares in FIG. 3 is used to indicate the collected detection data) and record the collected detection data in the iOAM header. A tail node is also configured to: decapsulate the iOAM header, restore the specified packet, and continue transmitting the specified packet. In addition, the tail node further needs to send, based on the iOAM header, the detection data collected by the previous-hop node.

The foregoing three path detection modes are merely used as examples. When the method for delivering OAM configuration information provided in this embodiment of this application is applied, this may not be limited to the foregoing three path detection modes.

In addition, the head node may alternatively be referred to as an encapsulation (encap) node, the intermediate node may alternatively be referred to as a transit (transit) node, and the tail node may alternatively be referred to as a decapsulation (decap) node. This is not specifically limited in this embodiment of this application.

In addition, it should be noted that the method for delivering OAM configuration information provided in this embodiment of this application may be applied to the foregoing iOAM technology, or may be applied to a conventional OAM technology. This is not specifically limited.

The following describes a method for delivering OAM configuration information provided in an embodiment of this application.

FIG. 4 is a flowchart of a method for delivering OAM configuration information according to an embodiment of this application. The method is applied to a control node in a communication network, and the communication network further includes a plurality of nodes. As shown in FIG. 4, the method includes the following several steps.

Step 401: The control node obtains advertisement packets sent by at least two of the plurality of nodes, where the advertisement packet includes indication information used to indicate a path detection mode supported by the sender of the advertisement packet.

In this embodiment of this application, to avoid a case in which after the control node delivers OAM configuration information to a node, the node cannot successfully perform path detection based on the OAM configuration information because the node does not support a path detection mode that needs to be used currently, each node in the communication network may send an advertisement packet to the control node in advance, where the advertisement packet includes indication information used to indicate a path detection mode supported by the sender of the advertisement packet. In this way, the control node may learn of nodes that are in the communication network and that can support the path detection mode that needs to be used currently. In this case, the control node may determine a detection path based on the nodes that can support the path detection mode that needs to be used currently. In this way, after OAM configuration information is sent to a head node and a tail node in the detection path, it can be ensured that the head node and the tail node can successfully perform path detection based on the OAM configuration information.

For ease of subsequent description, the advertisement packet provided in this embodiment of this application is first described herein.

In an example, the advertisement packet may further include indication information used to indicate that a type of the advertisement packet is an OAM capability advertisement packet. In this way, when a node receives an advertisement packet sent by another node, the node can learn, based only on a type of the advertisement packet, that the advertisement packet is used to advertise a path detection mode supported by the another node. That is, a packet of a new type (type) is defined in this embodiment of this application, and the packet is used to indicate the advertisement packet in the embodiment shown in FIG. 4.

In addition, types of detection data collected by different vendors in a same path detection mode may be slightly different, or types of detection data collected by devices of different batches of a same vendor in a same path detection mode may be slightly different. Therefore, in an example, the advertisement packet may further include indication information used to indicate a type of detection data corresponding to the path detection mode supported by the sender of the advertisement packet. The indication information used to indicate the type of the detection data corresponding to the path detection mode supported by the sender of the advertisement packet may be directly the type of the detection data, or may be a namespace identifier (namespaceID). When the indication information used to indicate the type of the detection data corresponding to the path detection mode supported by the sender of the advertisement packet is the namespace identifier, the control node may determine, based on the namespace identifier and from a prestored correspondence between a namespace identifier and a data type, the type of the detection data corresponding to the path detection mode supported by the sender of the advertisement packet.

It should be noted that, if the types of the detection data collected by different vendors in the same path detection mode are the same, or if devices in the communication network are all from a same vendor and types of detection data collected by all the devices from the same vendor in a same path detection mode are the same, the advertisement packet may not need to include the indication information used to indicate the type of the detection data corresponding to the path detection mode supported by the sender of the advertisement packet.

In addition, it should be noted that, when the namespace identifier cannot be used to indicate the type of the detection data corresponding to the path detection mode supported by the sender of the advertisement packet, the type of the detection data corresponding to the path detection mode supported by the sender of the advertisement packet cannot be determined based on the namespace identifier.

In addition, to further ensure that each node can successfully perform path detection based on OAM configuration information, the advertisement packet includes indication information used to indicate a type of a protocol used when a packet header carrying data detection instructions is encapsulated into a packet that is for path detection. The type of the protocol may be an internet protocol version 4 (internet protocol version 4, IPv4), an internet protocol version 6 (internet protocol version 6, IPv6), or a segment routing over IPv6 (segment routing over IPv6, SRv6) protocol. In this case, when determining the detection path, the control node further needs to consider whether a type of a protocol indicated in the advertisement packet sent by the node is consistent with a type of a protocol used when the service packet that is currently used for path detection carries data encapsulation instructions, and continues to determine the detection path only when the foregoing two types are consistent.

In addition, to be compatible with a currently existing communication protocol, the advertisement packets may be directly packets already defined in the currently existing communication protocol, provided that the packets meet the foregoing conditions.

In an example, when a communication protocol used by any one of the at least two nodes that send the advertisement packets is an open shortest path first (open shortest path first, OSPF) protocol, the advertisement packet is a packet based on router information link state advertisement (routing information link-state advertisement, RI LSA). That is, one RI LSA in an advertisement packet in the OSPF protocol may be extended, and an obtained packet is the advertisement packet provided in this embodiment of this application.

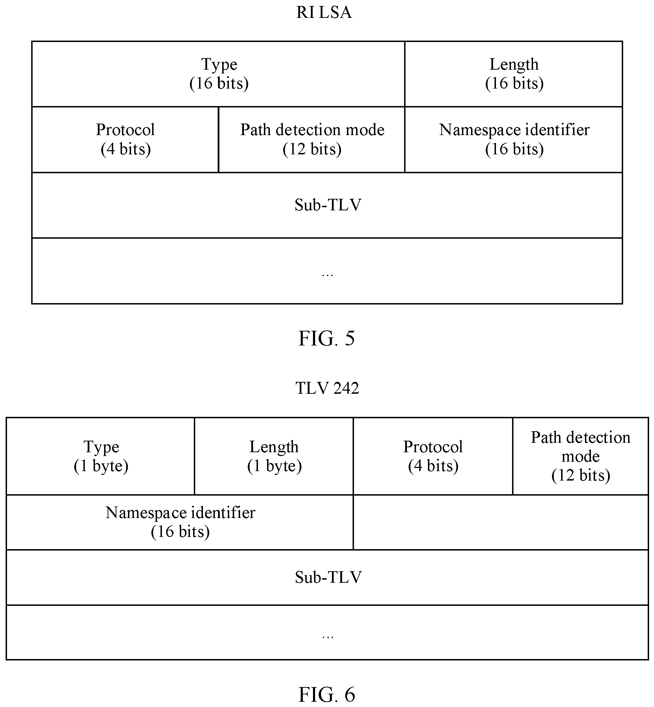

FIG. 5 is a schematic diagram of a format of an RI LSA according to an embodiment of this application. As shown in FIG. 5, the RI LSA includes a 16-bit (bit) type (type) field, a 16-bit length (length) field, a 4-bit protocol (protocol) field, a 12-bit path detection mode (iOAM type) field, a 16-bit namespace identifier (namespaceID) field, and one or more sub-TLVs (sub-TLVs).

The type field is used to indicate that a type of the RI LSA is an OAM capability advertisement packet. The length field is used to indicate a length of the RI LSA. The protocol field is used to indicate a type of a protocol used when a packet header carrying data detection instructions is encapsulated into a packet that is for path detection. The path detection mode field is used to indicate a supported path detection mode. The namespace identifier field is used to indicate a type of detection data supported by the supported path detection mode. The one or more sub-TLVs are used to carry other information.

In another example, when a communication protocol used by any one of the at least two nodes that send the advertisement packets is an intermediate system to intermediate system (Intermediate system to intermediate system, ISIS) protocol, the advertisement packet may be a packet based on a TLV 242. That is, one TLV 242 in an advertisement packet in the ISIS protocol may be extended, and an obtained packet is the advertisement packet provided in this embodiment of this application.

FIG. 6 is a schematic diagram of a format of a TLV 242 according to an embodiment of this application. As shown in FIG. 6, the TLV 242 includes a 1-byte type (type) field, a 1-byte length (length) field, a 4-bit protocol (protocol) field, a 12-bit path detection mode (iOAM type) field, a 16-bit namespace identifier (namespaceID) field, and one or more sub-TLVs (sub-TLVs).

Functions of the fields shown in FIG. 6 are the same as functions of the fields shown in FIG. 5, and are not described herein again.

In another example, when a communication protocol used by any one of the at least two nodes that send the advertisement packets is a border gateway protocol (border gateway protocol, BGP), the advertisement packet is a packet based on an opaque node attribute TLV (opaque Node attribute TLV). That is, an opaque node attribute TLV in an advertisement packet in the BGP protocol may be extended, and an obtained packet is the advertisement packet provided in this embodiment of this application.

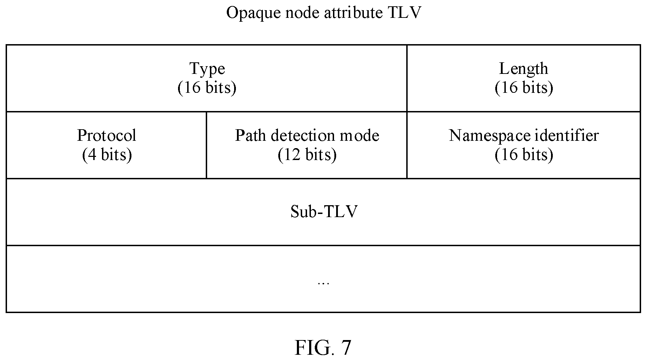

FIG. 7 is a schematic diagram of a format of an opaque node attribute TLV according to an embodiment of this application. As shown in FIG. 7, the opaque node attribute TLV includes a 16-bit (bit) type (type) field, a 16-bit length (length) field, a 4-bit protocol (protocol) field, a 12-bit path detection mode (iOAM type) field, a 16-bit namespace identifier (namespaceID) field, and one or more sub-TLVs (sub-TLVs).

Functions of the fields shown in FIG. 7 are the same as functions of the fields shown in FIG. 5, and are also not described herein again.

It should be noted that FIG. 5 to FIG. 7 are merely used to describe the advertisement packet provided in this embodiment of this application by using examples, and do not constitute a limitation on the advertisement packet provided in this embodiment of this application.

Step 402: The control node determines the detection path based on the path detection mode that needs to be used and the advertisement packets sent by the at least two nodes.

Based on step 401, it can be learned that the advertisement packet includes the indication information used to indicate the path detection mode supported by the sender of the advertisement packet. Therefore, in an example, an implementation process of step 401 may be: The control node determines the head node and the tail node in the detection path based on nodes that are in the at least two nodes and that support the path detection mode that needs to be used.

Specifically, the control node may select, from the at least two nodes based on the advertisement packets sent by the at least two nodes, the nodes that support the path detection mode that needs to be used. Based on the selected nodes, the head node and the tail node that are used to perform path detection are determined, that is, the head node and the tail node in the detection path are determined.

Alternatively, a node may be first determined in a manner of determining a head node in a related technology (where, for example, a node at an ingress of a network is used as the head node), and then whether the node supports the path detection mode that needs to be used is determined. If the node supports the path detection mode that needs to be used, the node is determined as the head node. If the node does not support the path detection mode that needs to be used, in an implementation, a node that is in a data flow and that is located at a next hop of the previously determined node may be further determined, and then whether the node can be used as the head node is determined. For a manner of determining the tail node, refer to this implementation. In addition, a node may be first determined in a manner of determining a tail node in the related technology (where, for example, a node at an egress of a network is used as the tail node), and then whether the node supports the path detection mode that needs to be used is determined. If the node supports the path detection mode that needs to be used, the node is determined as the tail node. If the node does not support the path detection mode that needs to be used, in an implementation, a node that is in a data flow and that is located at a previous hop of the previously determined node may be further determined, and then whether the node can be used as the tail node is determined.

For determining the head node and the tail node from the selected nodes, refer to the implementations of determining the head node and the tail node in the related technology. Details are not described herein again. For example, a node at an ingress of the network in the selected nodes may be determined as the head node, and a node at an egress of the network in the selected nodes may be determined as the tail node.

In addition, after determining the head node or the tail node, if an intermediate node exists in the detection path, the control node may further continue to determine one or more intermediate nodes in the detection path based on the nodes that are in the at least two nodes and that support the path detection mode that needs to be used. In this case, an implementation of obtaining the detection path may be as follows: first determining the head node and the tail node from the selected nodes, and then determining a plurality of intermediate nodes based on the determined head node and tail node, to obtain the detection path. For determining the plurality of intermediate nodes based on the determined head node and tail node, refer to the related technology. Details are not described herein.

In addition, when the advertisement packet further includes the indication information used to indicate the type of the detection data corresponding to the path detection mode supported by the sender of the advertisement packet, in step 401, the control node may further first determine a type of detection data that needs to be collected based on the path detection mode that needs to be used, and then determine the head node and the tail node in the detection path based on nodes that are in the at least two nodes, that support the path detection mode that needs to be used, and whose advertisement packets indicate types of detection data that are consistent with the type of the detection data that needs to be collected. Specifically, after selecting, from the at least two nodes, the nodes that support the path detection mode that needs to be used, the control node may continue to select, from the selected nodes, nodes whose advertisement packets indicate the types of the detection data that are consistent with the type of the detection data that needs to be collected. Therefore, the head node and the tail node that are used to perform path detection are determined based on the nodes that the control node continues to select.

That is, when determining that a node supports the path detection mode that needs to be used, the control node further needs to determine that a type of detection data indicated by an advertisement packet sent by the node is consistent with the type of the detection data that needs to be collected. In this case, the node is considered as a candidate node for determining the detection path.

In addition, as the advertisement packet further includes the type of the protocol used when the packet header carrying the data detection instructions is encapsulated into the packet that is for path detection, the control nod first determines a type of a protocol used when a packet header carrying data detection instructions is encapsulated into the packet that is for path detection. Then, for nodes whose advertisement packets indicate types of protocols that are consistent with the determined protocol type, the step of determining the head node and the tail node in the detection path based on the nodes that are in the at least two nodes and that support the path detection mode that needs to be used is performed. Specifically, the control node may first select, from the at least two nodes, the nodes whose advertisement packets indicate the types of the protocols that are consistent with the determined protocol type; and select, from the selected nodes based on the advertisement packets sent by the selected nodes, nodes that support the path detection mode that needs to be used, to determine the detection path in the foregoing manner.

For example, when the packet for path detection uses IPv6 to encapsulate an iOAM header, the control node needs to first select, from the at least two nodes, nodes whose advertisement packets indicate a protocol type of IPv6, and then selects nodes that support the path detection mode that needs to be used.

It should be noted that selection of nodes corresponding to a consistent protocol type and selection of nodes that support the path detection mode that needs to be used are not performed in any sequence, provided that the finally selected nodes can meet the two conditions.

Step 403: The control node delivers the OAM configuration information to the head node and the tail node in the detection path.

For example, the OAM configuration information delivered by the control node to the head node includes first access control list (access control list, ACL) configuration instructions, and the first ACL configuration instructions include an identifier of a to-be-encapsulated packet and specific content encapsulated into the packet. The OAM configuration information delivered to the tail node includes second ACL configuration instructions, and the second ACL configuration instructions include an identifier of a to-be-decapsulated packet.

The identifier of the to-be-encapsulated packet and the identifier of the to-be-decapsulated packet are a same identifier, and the identifier is used to indicate an identifier of the packet that is for path detection. For example, the identifier may be a destination address of the packet.

For example, in an iOAM technology, after the head node receives the OAM configuration information, if an identifier of a received service packet is the same as the identifier of the to-be-encapsulated packet included in the first ACL configuration instructions, the head node encapsulates an iOAM header into the service packet. The iOAM header carries data collection instructions, and the data collection instructions are determined based on the specific content that is encapsulated into the packet and that is included in the first ACL configuration instructions. Then, the service packet encapsulated with the iOAM header is sent to a next-hop node.

After the tail node receives the OAM configuration information, if an identifier of a received service packet is the same as the identifier of the to-be-encapsulated packet included in the first ACL configuration instructions, the tail node decapsulates an iOAM header in the service packet, and reports information carried in the iOAM header.

In addition, specific content that is encapsulated into the packet and that is included in the first ACL configuration instructions depends on the path detection mode that needs to be used. For example, when the path detection mode is an iOAM trace mode, the specific content may include information such as an interface for packet sending and receiving. When the path detection mode is an iOAM E2E mode, the specific content may be information such as packet sequence numbers of sent or received packets or timestamps for packet sending and receiving.

In addition, the OAM configuration information delivered to the head node may further include an identifier configured for the head node and/or instructions for enabling detection data collection for the head node. The OAM configuration information delivered to the tail node may also further include an identifier configured for the tail node and/or instructions for enabling detection data collection for the tail node. This is not specifically limited herein, and specifically included content may be adjusted based on a current service scenario.

In addition, in addition to delivering the OAM configuration information to the head node and the tail node, the control node may further deliver OAM configuration information to the intermediate node. It should be noted that, specific content of the OAM configuration information delivered to the intermediate node and a scenario in which the OAM configuration information is delivered to the intermediate node are not limited in this embodiment of this application. For example, the OAM configuration delivered to the intermediate node may include an identifier configured for the intermediate node, and/or instructions for enabling detection data collection for the intermediate node.

In this embodiment of this application, to avoid the case in which after the control node delivers the OAM configuration information to the node, the node cannot successfully perform path detection based on the OAM configuration information because the node does not support the path detection mode that needs to be used currently, each node in the communication network may send the advertisement packet to the control node in advance, where the advertisement packet includes the indication information used to indicate the path detection mode supported by the sender of the advertisement packet. In this way, the control node may learn of the nodes that are in the communication network and that can support the path detection mode that needs to be used currently. In this case, the control node may determine the detection path based on the nodes that can support the path detection mode that needs to be used currently. In this way, after the OAM configuration information is sent to the head node and the tail node in the detection path, it can be ensured that the head node and the tail node can successfully perform path detection based on the OAM configuration information.

The following describes a structure of each node in the communication network provided in this embodiment of this application.

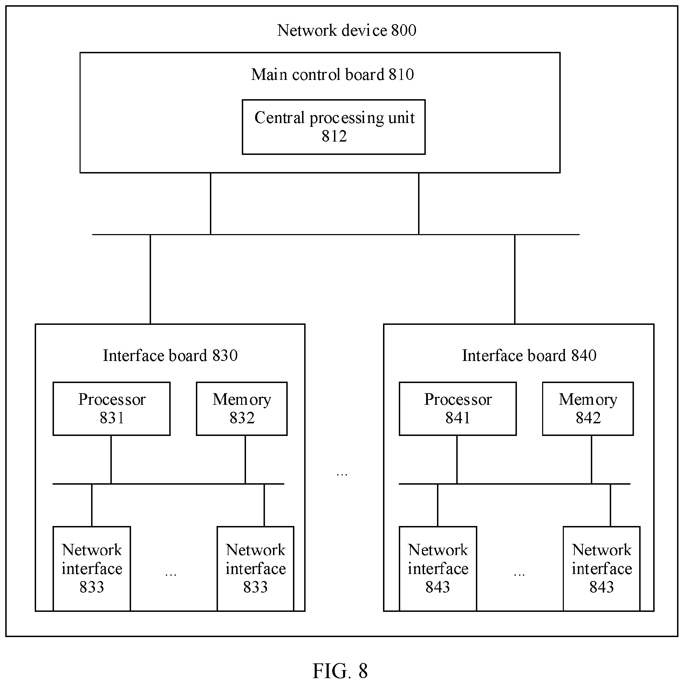

FIG. 8 is a schematic diagram of a structure of a network device according to an embodiment of this application. The network device may be any one of the plurality of nodes included in the communication network in any one of the foregoing embodiments. The network device 800 may be a switch, a router, or another network device that forwards a packet. In this embodiment, the network device 800 includes a main control board 810, an interface board 830, and an interface board 840. When there are a plurality of interface boards, a switching board (not shown in the figure) may be included. The switching board is configured to complete data exchange between interface boards (the interface board is also referred to as a line card or a service board).

The main control board 810 is configured to complete functions such as system management, device maintenance, and protocol processing. The interface boards 830 and 840 are configured to: provide various service interfaces (for example, a POS interface, a GE interface, and an ATM interface), and forward a packet. The main control board 810 mainly includes three types of function units: a system management and control unit, a system clock unit, and a system maintenance unit. The main control board 810, the interface board 830, and the interface board 840 are connected to a system backboard by using a system bus to implement interworking. The interface board 830 includes one or more processors 831. The processor 831 is configured to: control and manage the interface board, communicate with a central processing unit on the main control board, and implement packet forwarding processing. A memory 832 on the interface board 830 is configured to store a forwarding entry, and the processor 831 forwards a packet by searching the forwarding entry stored in the memory 832.

The interface board 830 includes one or more network interfaces 833, configured to: receive a detection packet sent by a previous-hop node, and send a processed detection packet to a next-hop network node based on instructions of the processor 831. Specific implementation processes are not described herein. In addition, in this embodiment of this application, the one or more network interfaces 833 are further configured to send the advertisement packets in step 401 to the control node, so that the control node can deliver the OAM configuration information by using step 401 to step 403 in FIG. 4. The processor 831 may be configured to determine the advertisement packets in step 401. The advertisement packet may be the advertisement packet shown in any one of FIG. 5 to FIG. 7. Specific functions of the processor 831 are not described herein one by one.

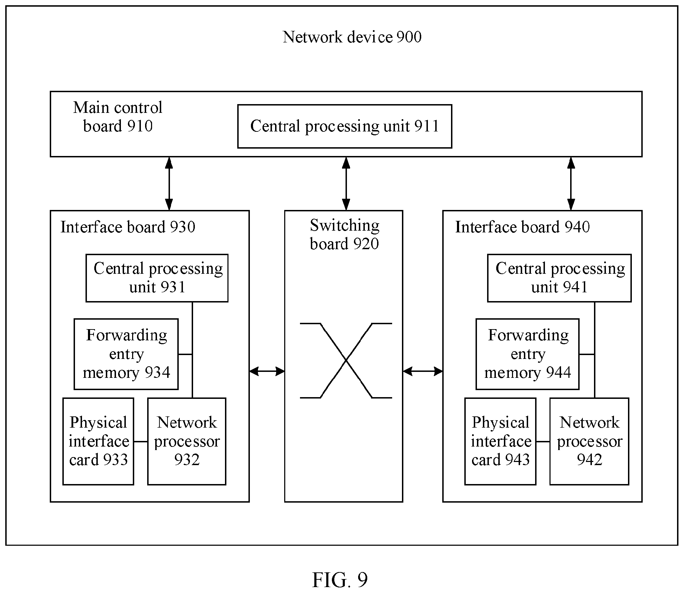

It may be understood that, as shown in FIG. 8, this embodiment includes a plurality of interface boards, and uses a distributed forwarding mechanism. In this mechanism, operations on the interface board 840 are basically similar to operations on the interface board 830. For brevity, details are not described again. In addition, it may be understood that the processor 831 and/or the processor 841 in the interface board 830 in FIG. 8 may be dedicated hardware or a chip, for example, a network processor or an application-specific integrated circuit (application-specific integrated circuit) to implement the foregoing functions. This implementation is usually referred to as a manner in which a forwarding plane uses the dedicated hardware or chip for processing. For a specific implementation of using the dedicated hardware or chip such as the network processor, refer to the embodiment shown in FIG. 9. In another implementation, the processor 831 and/or the processor 841 may alternatively be a general-purpose processor, for example, a general-purpose CPU, to implement the functions described above.

In addition, it should be noted that there may be one or more main control boards, and when there are a plurality of main control boards, the main control boards may include an active main control board and a standby main control board. There may be one or more interface boards, and a device having a stronger data processing capability provides more interface boards. If there are a plurality of interface boards, the plurality of interface boards can communicate with each other by using one or more switching boards, and the plurality of interface boards can jointly implement load sharing and redundancy backup. In a centralized forwarding architecture, the device may not need the switching board, and the interface board provides a function of processing service data of an entire system. In a distributed forwarding architecture, the device includes a plurality of interface boards. Data exchange between the plurality of interface boards may be implemented by using a switching board, and the plurality of interface boards can provide a large-capacity data exchange and processing capability. Therefore, a data access and processing capability of the network device in the distributed architecture is better than that of the device in the centralized architecture. A specific architecture that is to be used depends on a specific networking deployment scenario. This is not limited herein.

In a specific embodiment, the memory 832 may be a read-only memory (read-only memory, ROM) or another type of static storage device that can store static information and instructions, a random access memory (random access memory, RAM) or another type of dynamic storage device that can store information and instructions, or may be an electrically erasable programmable read-only memory (electrically erasable programmable read-only memory, EEPROM), a compact disc read-only memory (compact disc read-only Memory, CD-ROM) or another compact disc storage, an optical disc storage (including a compact optical disc, a laser disc, an optical disc, a digital versatile disc, a Blu-ray disc, and the like), a magnetic disk storage medium or another magnetic storage device, or any other medium that can be used to carry or store expected program code in a form of an instruction or a data structure and that can be accessed by a computer. However, the memory 832 is not limited thereto. The memory 832 may exist independently, and is connected to the processor 831 through a communication bus. Alternatively, the memory 832 may be integrated into the processor 831.

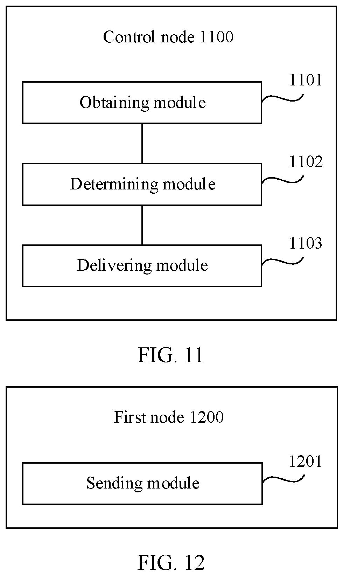

The memory 832 is configured to store program code, and execution is controlled by the processor 831, to perform the path detection method provided in the foregoing embodiment. The processor 831 is configured to execute the program code stored in the memory 832. The program code may include one or more software modules. The one or more software modules may be the software modules provided in either of the following embodiment in FIG. 11 or FIG. 12.

In a specific embodiment, the network interface 833 may be configured to communicate with another device or a communication network such as an Ethernet, a radio access network (radio access network, RAN), or a wireless local area network (wireless local area network, WLAN) via any apparatus such as a transceiver.

FIG. 9 is a schematic diagram of a structure of another network device according to an embodiment of this application. The network device may be the first node in the plurality of nodes in the communication network provided in any one of the foregoing embodiments shown in figures. The network device 900 may be a switch, a router, or another network device that forwards a packet. In this embodiment, the network device 900 includes a main control board 910, an interface board 930, a switching board 920, and an interface board 940. The main control board 910 is configured to complete functions such as system management, device maintenance, and protocol processing. The switching board 920 is configured to complete data exchange between interface boards (the interface board is also referred to as a line card or a service board). The interface boards 930 and 940 are configured to: provide various service interfaces (for example, a POS interface, a GE interface, and an ATM interface), and forward a data packet. A control plane includes management and control units of the main control board 910 and management and control units on the interface board 930 and the interface board 940. The main control board 910 mainly includes three types of function units: a system management and control unit, a system clock unit, and a system maintenance unit. The main control board 910, the interface boards 930 and 940, and the switching board 920 connect to a system backboard by using a system bus to implement interworking. A central processing unit 931 on the interface board 930 is configured to: control and manage the interface board, and communicate with a central processing unit on the main control board. A forwarding entry memory 934 on the interface board 930 is configured to store a forwarding entry, and the network processor 932 forwards a packet by searching the forwarding entry stored in the forwarding entry memory 934.

A physical interface card 933 of the interface board 930 is configured to receive a detection packet sent by a previous-hop node. Specific implementation processes are not described herein.

The network processor 932 is configured to determine the advertisement packets in step 401. The advertisement packet may be the advertisement packet shown in any one of FIG. 5 to FIG. 7. Specific functions of the network processor 932 are not described herein one by one.

Then, the detection packet to which the detection data is added is sent to a next-hop node of the first node by using the physical interface card 933. In addition, in this embodiment of this application, the physical interface card 933 is further configured to send the advertisement packets in step 401 to a control node, so that the control node can deliver the CAM configuration information by using step 401 to step 403 in FIG. 4. A specific implementation process is not described herein one by one.

It may be understood that, as shown in FIG. 9, this embodiment includes a plurality of interface boards, and uses a distributed forwarding mechanism. In this mechanism, operations on the interface board 940 are basically similar to operations on the interface board 930. For brevity, details are not described again. In addition, as described above, functions of the network processors 932 and 942 in FIG. 9 may be implemented by using an application-specific integrated circuit (application-specific integrated circuit).

In addition, it should be noted that there may be one or more main control boards, and when there are a plurality of main control boards, the main control boards may include an active main control board and a standby main control board. There may be one or more interface boards, and a device having a stronger data processing capability provides more interface boards. There may also be one or more physical interface cards on the interface board. There may be no switching board or one or more switching boards. When there are a plurality of switching boards, load sharing and redundancy backup may be implemented together. In a centralized forwarding architecture, the device may not need the switching board, and the interface board provides a function of processing service data of an entire system. In a distributed forwarding architecture, the device may have at least one switching board. Data exchange between a plurality of interface boards is implemented by using the switching board, to provide a large-capacity data exchange and processing capability. Therefore, a data access and processing capability of the network device in the distributed architecture is better than that of the device in the centralized architecture. A specific architecture that is to be used depends on a specific networking deployment scenario. This is not limited herein.

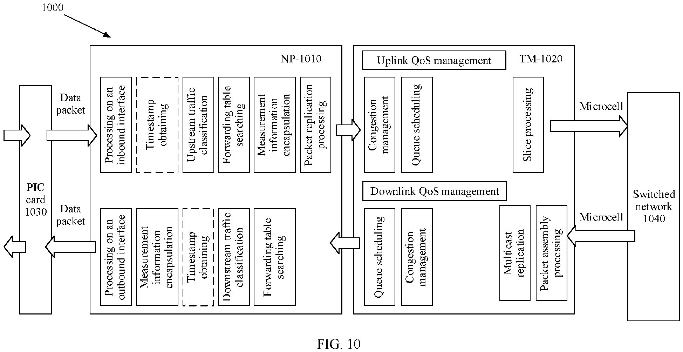

FIG. 10 is a schematic diagram of a structure of an interface board 1000 in the network device shown in FIG. 9 according to an embodiment of this application. A network device in which the interface board 1000 is located may be the first node in the plurality of nodes included in the communication network in any one of the foregoing embodiments. The interface board 1000 may include a physical interface card (physical interface card, PIC) 1030, a network processor (network processor, NP) 1010, and a traffic management (traffic management) module 1020.

The physical interface card (physical interface card, PIC) is configured to implement a physical layer interconnection function. Original traffic enters an interface board of the network device via the PIC, and a processed packet is sent from the PIC card.

The network processor NP 1010 is configured to implement packet forwarding processing. Specifically, processing of an uplink packet includes: processing on an inbound interface of the packet, timestamp obtaining, upstream traffic classification, forwarding table searching, measurement information encapsulation, and packet replication processing; processing of a downlink packet includes: forwarding table searching, downstream traffic classification, timestamp obtaining, measurement information encapsulation, and processing on an outbound interface.

The traffic management TM is configured to implement functions such as QoS, line-rate forwarding, large-capacity buffering, and queue management. Specifically, uplink traffic management includes uplink QoS processing (such as congestion management and queue scheduling) and slice processing; downlink traffic management includes packet assembly processing, multicast replication, and downlink QoS processing (such as congestion management and queue scheduling).

It may be understood that if the network device has a plurality of interface boards 1000, the plurality of interface boards 1000 may communicate with each other in a switched network 1040.

It should be noted that FIG. 10 shows only an example of a processing procedure or modules inside the NP. A processing sequence of the modules during specific implementation is not limited thereto. In addition, in actual application, another module or processing procedure may be deployed based on a requirement. This is not limited in this embodiment of this application.

FIG. 11 is a schematic diagram of a structure of a control node according to an embodiment of this application. The control node is a control node in a communication network, and the communication network further includes a plurality of nodes. As shown in FIG. 11, the control node 1100 includes the following modules.

An obtaining module 1101 is configured to obtain advertisement packets sent by at least two of the plurality of nodes, where the advertisement packet includes indication information used to indicate a path detection mode supported by the sender of the advertisement packet. For a specific implementation process, refer to step 401 in the embodiment in FIG. 4.

The determining module 1102 is configured to determine a detection path based on a path detection mode that needs to be used and the advertisement packets sent by the at least two nodes. For a specific implementation process, refer to step 402 in the embodiment in FIG. 4.

A delivering module 1103 is configured to deliver OAM configuration information to a head node and a tail node in the detection path. For a specific implementation process, refer to step 403 in the embodiment in FIG. 4.

Optionally, the determining module is specifically configured to:
determine the head node and the tail node in the detection path based on nodes that are in the at least two nodes and that support the path detection mode that needs to be used.

Optionally, the determining module is further specifically configured to:
determine one or more intermediate nodes in the detection path.

Optionally, the advertisement packet further includes indication information used to indicate a type of detection data corresponding to the path detection mode supported by the sender of the advertisement packet.

The determining module is specifically configured to:
determine a type of detection data that needs to be collected; and
determine the head node and the tail node in the detection path based on nodes that are in the at least two nodes, that support the path detection mode that needs to be used, and whose advertisement packets indicate types of detection data that are consistent with the type of the detection data that needs to be collected.

The advertisement packet further includes indication information used to indicate a type of a protocol used when a packet header carrying data detection instructions is encapsulated into a packet that is for path detection.

The determining module is specifically configured to:
determine a type of a protocol used when a packet header carrying data detection instructions is encapsulated into the packet that is for path detection; and
for nodes whose advertisement packets indicate types of protocols that are consistent with the determined protocol type, perform the step of determining the head node and the tail node in the detection path based on the nodes that are in the at least two nodes and that support the path detection mode that needs to be used.

Optionally, the advertisement packet further includes indication information used to indicate that a type of the advertisement packet is an OAM capability advertisement packet.

Optionally, when a communication protocol used by any one of the at least two nodes is an open shortest path first OSPF protocol, the advertisement packet is a packet based on a router information link state advertisement RI LSA.

Optionally, when a communication protocol used by any one of the at least two nodes is an intermediate system to intermediate system ISIS protocol, the advertisement packet is an advertisement packet based on a TLV 242.

Optionally, when a communication protocol used by any one of the at least two nodes is a border gateway protocol BGP, the advertisement packet is an advertisement packet based on an opaque node attribute TLV.

Optionally, the OAM configuration information delivered to the head node includes first access control list ACL configuration instructions, where the first ACL configuration instructions include an identifier of a to-be-encapsulated packet and specific content encapsulated into the packet; and
the OAM configuration information delivered to the tail node includes second ACL configuration instructions, and the second ACL configuration instructions include an identifier of a to-be-decapsulated packet.

In this embodiment of this application, to avoid a case in which after the control node delivers OAM configuration information to a node, the node cannot successfully perform path detection based on the OAM configuration information because the node does not support a path detection mode that needs to be used currently, each node in the communication network may send an advertisement packet to the control node in advance, where the advertisement packet includes indication information used to indicate a path detection mode supported by the sender of the advertisement packet. In this way, the control node may learn of nodes that are in the communication network and that can support the path detection mode that needs to be used currently. In this case, the control node may determine a detection path based on the nodes that can support the path detection mode that needs to be used currently. In this way, after the OAM configuration information is sent to the head node and the tail node in the detection path, it can be ensured that the head node and the tail node can successfully perform path detection based on the OAM configuration information.

It should be noted that, during delivering the OAM configuration information by the control node provided in the foregoing embodiments, description is given only using division of the foregoing functional modules. In practice, the functions may be allocated to different functional modules for implementation based on requirements. To be specific, an internal structure of the device is divided into different functional modules to implement all or a part of the functions described above. In addition, the control node provided in the foregoing embodiments and the method embodiments for delivering the OAM configuration information belong to a same concept. For a specific implementation process, refer to the method embodiments. Details are not described herein again.

FIG. 12 is a schematic diagram of a structure of a first node according to an embodiment of this application. A communication network includes a control node and a plurality of nodes, and the first node is one of the plurality of nodes. As shown in FIG. 12, the first node 1200 includes:
a sending module 1201, configured to send an advertisement packet to the control node, where the advertisement packet includes indication information used to indicate a path detection mode supported by the first node, to enable the control node to determine a detection path based on the advertisement packet. For a specific implementation of the advertisement packet sent by the first node, refer to the detailed description of the advertisement packet in step 401 in the embodiment of FIG. 4.

The advertisement packet further includes indication information used to indicate a type of detection data corresponding to the path detection mode supported by the first node.

The advertisement packet further includes indication information used to indicate a type of a protocol used when a packet header carrying data detection instructions is encapsulated into a packet that is for path detection.

Optionally, the advertisement packet further includes indication information used to indicate that a type of the advertisement packet is an OAM capability advertisement packet.

Optionally, when a communication protocol used by the first node is an open shortest path first OSPF protocol, the advertisement packet is a packet based on a router information link state advertisement RI LSA.

Optionally, when a communication protocol used by the first node is an intermediate system to intermediate system ISIS protocol, the advertisement packet is a packet based on a TLV 242.

Optionally, when a communication protocol used by the first node is a border gateway protocol BGP, the advertisement packet is a packet based on an opaque node attribute TLV.

In this embodiment of this application, to avoid a case in which after the control node delivers OAM configuration information to a node, the node cannot successfully perform path detection based on the OAM configuration information because the node does not support a path detection mode that needs to be used currently, each node in the communication network may send an advertisement packet to the control node in advance, where the advertisement packet includes indication information used to indicate a path detection mode supported by the sender of the advertisement packet. In this way, the control node may learn of nodes that are in the communication network and that can support the path detection mode that needs to be used currently. In this case, the control node may determine a detection path based on the nodes that can support the path detection mode that needs to be used currently. In this way, after OAM configuration information is sent to a head node and a tail node in the detection path, it can be ensured that the head node and the tail node can successfully perform path detection based on the OAM configuration information.

It should be noted that, during sending the advertisement packet by the first node provided in the foregoing embodiments, description is given only using division of the foregoing functional modules. In practice, the functions may be allocated to different functional modules for implementation based on requirements. To be specific, an internal structure of the device is divided into different functional modules to implement all or a part of the functions described above. In addition, the first node provided in the foregoing embodiments and the method embodiments for delivering the OAM configuration information belong to a same concept. For a specific implementation process, refer to the method embodiments. Details are not described herein again.

In addition, an embodiment of this application further provides a system for delivering OAM configuration information. The system includes a control node and a plurality of nodes. A first node in the plurality of nodes is configured to send an advertisement packet to the control node, where the advertisement packet includes indication information used to indicate a path detection mode supported by the first node. The control node is configured to receive the advertisement packet sent by the first node, to deliver configuration information by using the embodiment shown in FIG. 4.

The advertisement packet further includes indication information used to indicate a type of detection data corresponding to the path detection mode supported by the first node.

The advertisement packet further includes indication information used to indicate a type of a protocol used when a packet header carrying data detection instructions is encapsulated into a packet that is for path detection.

Optionally, the advertisement packet further includes indication information used to indicate that a type of the advertisement packet is an OAM capability advertisement packet.

Optionally, when a communication protocol used by the first node is an open shortest path first OSPF protocol, the advertisement packet is a packet based on a router information link state advertisement RI LSA.

Optionally, when a communication protocol used by the first node is an intermediate system to intermediate system ISIS protocol, the advertisement packet is a packet based on a TLV 242.

Optionally, when a communication protocol used by the first node is a border gateway protocol BGP, the advertisement packet is a packet based on an opaque node attribute TLV.

A process in which the control node delivers OAM configuration information based on the advertisement packet has been described in detail in the foregoing embodiments, and details are not described herein again.

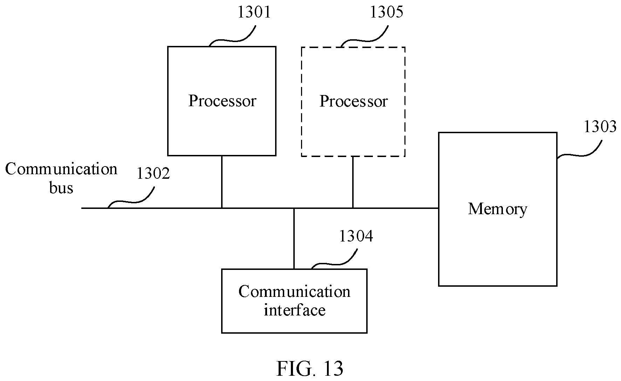

FIG. 13 is a schematic diagram of a structure of a network device according to an embodiment of the present invention. Any node in the plurality of nodes in the embodiment of FIG. 4 may be implemented by using the network device 1300 shown in FIG. 13. In this case, the network device 1300 may be a switch, a router, or another network device for packet forwarding. In addition, the control node in the embodiment of FIG. 4 may also be implemented by the network device 1300 shown in FIG. 13. In this case, for a specific function of the network device 1300, refer to a specific implementation of the control node in the embodiment of FIG. 4. Details are not described herein again. Refer to FIG. 13. The network device includes at least one processor 1301, a communication bus 1302, a memory 1303, and at least one communication interface 1304.

The processor 1301 may be a general-central processing unit (central processing unit, CPU), an application-specific integrated circuit (application-specific integrated circuit, ASIC), or one or more integrated circuits configured to control program execution of solutions of this application. When the network device is used as any node in a plurality of nodes in a communication network, the processor 1301 is configured to determine the advertisement packets in step 401 in FIG. 4. When the network device is used as a control node in a communication network, the processor 1301 is configured to implement any method in step 401 to step 403 in FIG. 4. Specific functions are not described herein again.

The communication bus 1302 may include a channel for transmitting information between the foregoing components.

The memory 1303 may be a read-only memory (read-only memory, ROM) or another type of static storage device that can store static information and instructions, a random access memory (random access memory, RAM) or another type of dynamic storage device that can store information and instructions, or may be an electrically erasable programmable read-only memory (electrically erasable programmable read-only memory, EEPROM), a compact disc read-only memory (compact disc read-only Memory, CD-ROM) or another compact disc storage, an optical disc storage (including a compact optical disc, a laser disc, an optical disc, a digital versatile disc, a Blu-ray disc, and the like), a magnetic disk or another magnetic storage device, or any other medium that can be used to carry or store expected program code in a form of an instruction or a data structure and that can be accessed by a computer. However, the memory 1303 is not limited thereto. The memory 1303 may exist independently, and is connected to the processor 1301 through the communication bus 1302. The memory 1303 may alternatively be integrated into the processor 1301.

The memory 1303 is configured to store application program code for executing the solutions in this application, and the processor 1301 controls the execution. The processor 1301 is configured to execute the program code stored in the memory 1303. The program code may include one or more software modules. The control node or any one of the plurality of nodes in the embodiment in FIG. 4 may determine, by using the processor 1301 and one or more software modules in the program code in the memory 1303, data used to develop an application. The one or more software modules may be the software modules provided in either of the embodiment in FIG. 11 or FIG. 12.

The communication interface 1304 is configured to communicate with another device or a communication network such as an Ethernet, a radio access network (radio access network, RAN), or a wireless local area network (wireless local area network, WLAN) via any apparatus such as a transceiver. When the network device is used as any one of the plurality of nodes in the communication network, the communication interface 1304 is configured to send the advertisement packets in step 401 in FIG. 4 to the control node. When the network device is used as the control node in the communication network, the communication interface 1304 is configured to receive the advertisement packets in step 401 in FIG. 4. Specific functions are not described herein again.

In a specific implementation, in an embodiment, the network device may include a plurality of processors, for example, the processor 1301 and a processor 1305 that are shown in FIG. 13. Each of the processors may be a single- CPU (single-CPU) processor or a multi- CPU (multi-CPU) processor. The processor herein may refer to one or more devices, circuits, and/or processing cores configured to process data (for example, computer program instructions).

The foregoing network device may be a general-purpose network device or a dedicated network device. In specific implementation, the network device may be a desktop, a portable computer, a network server, a personal digital assistant (personal digital assistant, PDA), a mobile phone, a tablet computer, a wireless terminal device, a communication device, or an embedded device. A type of the network device is not limited in this embodiment of this application.

It may be understood that when the network device shown in FIG. 13 is the first node in any one of the foregoing method embodiments, this embodiment may alternatively be implemented based on a virtual first node implemented by a general physical server in combination with a network functions virtualization NFV technology. The virtual first node is a virtual router, and the second, third, ..., N^{th} node may be virtualized (based on an actual requirement). The virtual first node may be a virtual machine (English: Virtual Machine, VM) on which a program used for providing a message sending function runs, and the virtual machine is deployed on a hardware device (for example, a physical server). The virtual machine is a complete software-simulated computer system that has complete hardware system functions and runs in an entirely isolated environment. After reading this application, with reference to the NFV technology, a person skilled in the art may virtualize, on the general physical server, a plurality of first nodes having the foregoing functions. Details are not described herein again.

All or some of the foregoing embodiments may be implemented through software, hardware, firmware, or any combination thereof. When the software is used to implement the embodiments, all or some of the embodiments may be implemented in a form of a computer program product. The computer program product includes one or more computer instructions. When the computer instructions are loaded and executed on a computer, the procedures or functions according to the embodiments of this application are all or partially generated. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium accessible by a computer, or a data storage device, such as a server or a data center, integrating one or more usable media. The usable medium may be a magnetic medium (for example, a floppy disk, a hard disk, or a magnetic tape), an optical medium (for example, a digital versatile disc (digital versatile disc, DVD)), a semiconductor medium (for example, a solid-state drive (solid-state drive, SSD)), or the like.

A person of ordinary skill in the art may understand that all or some of the steps in the embodiments may be implemented by hardware or a program instructing related hardware. The program may be stored in a computer-readable storage medium. The storage medium may be a read-only memory, a magnetic disk, an optical disc, or the like.

The foregoing description is merely embodiments of this application, but are not intended to limit this application. The scope of protection is defined by the appended claims.

## Claims

1. A method for delivering OAM configuration information for path detection, applied to a control node in a communication network, wherein the communication network further comprises a plurality of nodes, and the method comprises:
obtaining, by the control node, advertisement packets sent by at least two of the plurality of nodes, wherein the advertisement packet comprises indication information used to indicate a path detection mode supported by the sender of the advertisement packet;
determining, by the control node, a detection path based on a path detection mode that needs to be used and the advertisement packets sent by the at least two nodes; and
delivering, by the control node, OAM configuration information to a head node and a tail node in the detection path;
wherein the determining, by the control node, a detection path based on a path detection mode that needs to be used and the advertisement packets sent by the at least two nodes comprises:
determining the head node and the tail node in the detection path based on nodes that are in the at least two nodes and that support the path detection mode that needs to be used;
the method being **characterised in that** the advertisement packet further comprises indication information used to indicate a type of a protocol used when a packet header carrying data detection instructions is encapsulated into a packet that is for path detection; and
before the determining the head node and the tail node in the detection path based on nodes that are in the at least two nodes and that support the path detection mode that needs to be used, the method further comprises:
determining a type of a protocol used when a packet header carrying data detection instructions is encapsulated into the packet that is for path detection; and
for nodes whose advertisement packets indicate types of protocols that are consistent with the determined protocol type, performing the step of determining the head node and the tail node in the detection path based on the nodes that are in the at least two nodes and that support the path detection mode that needs to be used.

2. The method according to claim 1, wherein the method further comprises: determining, by the control node, one or more intermediate nodes in the detection path based on the nodes that are in the at least two nodes and that support the path detection mode that needs to be used; and delivering, by the control node, OAM configuration information to the one or more intermediate nodes in the detection path.

3. The method according to claim 1 or 2, wherein the advertisement packet further comprises indication information used to indicate a type of detection data corresponding to the path detection mode supported by the sender of the advertisement packet; and
the determining the head node and the tail node in the detection path based on nodes that are in the at least two nodes and that support the path detection mode that needs to be used comprises:
determining a type of detection data that needs to be collected; and
determining the head node and the tail node in the detection path based on nodes that are in the at least two nodes, that support the path detection mode that needs to be used, and whose advertisement packets indicate types of detection data that are consistent with the type of the detection data that needs to be collected.

4. The method according to any one of claims 1 to 3, wherein
the OAM configuration information delivered to the head node comprises first access control list, ACL, configuration instructions, wherein the first ACL configuration instructions comprise an identifier of a to-be-encapsulated packet and specific content encapsulated into the packet; and
the OAM configuration information delivered to the tail node comprises second ACL configuration instructions, and the second ACL configuration instructions comprise an identifier of a to-be-decapsulated packet.

5. A method for delivering OAM configuration information for path detection, applied to a first node in a communication network, wherein the communication network comprises a control node and a plurality of nodes, and the first node is one of the plurality nodes; and
the method comprises:
sending, by the first node, an advertisement packet to the control node, wherein the advertisement packet comprises indication information used to indicate a path detection mode supported by the first node, to enable the control node to determine a detection path based on the advertisement packet;
wherein the advertisement packet further comprises indication information used to indicate a type of detection data corresponding to the path detection mode supported by the first node;
the method being **characterised in that** the advertisement packet further comprises indication information used to indicate a type of a protocol used when a packet header carrying data detection instructions is encapsulated into a packet that is for path detection.

6. The method according to claim 5, wherein the advertisement packet further comprises indication information used to indicate that a type of the advertisement packet is an OAM capability advertisement packet.

7. The method according to any one of claims 5 to 6, wherein when a communication protocol used by the first node is an open shortest path first, OSPF, protocol, the advertisement packet is a packet based on a router information link state advertisement, RI LSA.

8. The method according to any one of claims 5 to 6, wherein when a communication protocol used by the first node is an intermediate system to intermediate system, ISIS, protocol, the advertisement packet is a packet based on a TLV 242.

9. The method according to any one of claims 5 to 6, wherein when a communication protocol used by the first node is a border gateway protocol, BGP, the advertisement packet is a packet based on an opaque node attribute TLV.

10. A network device, wherein the network device is configured to implement the method according to any one of claims 1 to 9.

11. A system for delivering OAM configuration information, wherein the system comprises a control node and a plurality of nodes, wherein
a first node in the plurality of nodes is configured to implement the method according to any one of claims 5-9; and
the control node is configured to implement the method according to any one of claims 1 to 4.

## Patentansprüche

1. Verfahren zum Übermitteln von OAM-Konfigurationsinformationen zur Pfaderkennung, angewendet auf einen Steuerknoten in einem Kommunikationsnetzwerk, wobei das Kommunikationsnetzwerk ferner eine Vielzahl von Knoten umfasst, und wobei das Verfahren Folgendes umfasst:
Erlangen von Ankündigungspaketen durch den Steuerknoten, die durch mindestens zwei der Vielzahl von Knoten gesendet werden, wobei das Ankündigungspaket Angabeinformationen umfasst, die zum Angeben eines durch den Absender des Ankündigungspakets unterstützten Pfaderkennungsmodus verwendet werden;
Bestimmen eines Erkennungspfads durch den Steuerknoten basierend auf einem zu verwendenden Pfaderkennungsmodus und den durch die mindestens zwei Knoten gesendeten Ankündigungspaketen; und
Übermitteln von OAM-Konfigurationsinformationen durch den Steuerknoten an einen Kopfknoten und einen Endknoten in dem Erkennungspfad;
wobei das Bestimmen eines Erkennungspfads durch den Steuerknoten basierend auf einem zu verwendenden Pfaderkennungsmodus und den durch die mindestens zwei Knoten gesendeten Ankündigungspaketen Folgendes umfasst:
Bestimmen des Kopfknotens und des Endknotens in dem Erkennungspfad basierend auf Knoten, die sich in den mindestens zwei Knoten befinden und den zu verwendenden Pfaderkennungsmodus unterstützen;
wobei das Verfahren **dadurch gekennzeichnet ist, dass** das Ankündigungspaket ferner Angabeinformationen umfasst, die verwendet werden, um einen Typ eines Protokolls anzugeben, das verwendet wird, wenn ein Paketheader, der Anweisungen zur Datenerkennung trägt, in ein Paket eingekapselt wird, das zur Pfaderkennung dient; und
wobei vor dem Bestimmen des Kopfknotens und des Endknotens in dem Erkennungspfad basierend auf Knoten, die sich in den mindestens zwei Knoten befinden und den zu verwendenden Pfaderkennungsmodus unterstützen, das Verfahren ferner Folgendes umfasst;
Bestimmen eines Typs eines Protokolls, das verwendet wird, wenn ein Paketheader mit Datenerkennungsanweisungen in das Paket eingekapselt wird, das zur Pfaderkennung dient; und
für Knoten, deren Ankündigungspakete Protokolltypen angeben, die mit dem bestimmten Protokolltyp übereinstimmen, Durchführen des Schritts zum Bestimmen des Kopfknotens und des Endknotens in dem Erkennungspfad basierend auf den Knoten, die sich in den mindestens zwei Knoten befinden und den Pfaderkennungsmodus unterstützen, der zu verwenden ist.

2. Verfahren nach Anspruch 1, wobei das Verfahren ferner umfasst: Bestimmen eines oder mehrerer Zwischenknoten in dem Erkennungspfad durch den Steuerknoten basierend auf den Knoten, die sich in den mindestens zwei Knoten befinden und den Pfaderkennungsmodus unterstützen, der zu verwenden ist; und Übermitteln von OAM-Konfigurationsinformationen durch den Steuerknoten an einen oder mehrere Zwischenknoten in dem Erkennungspfad.

3. Verfahren nach Anspruch 1 oder 2, wobei das Ankündigungspaket ferner Angabeinformationen umfasst, die verwendet werden, um einen Typ von Erkennungsdaten anzugeben, der dem durch den Absender des Ankündigungspakets unterstützten Pfaderkennungsmodus entspricht; und
das Bestimmen des Kopfknotens und des Endknotens in dem Erkennungspfad basierend auf Knoten, die sich in den mindestens zwei Knoten befinden und den zu verwendenden Pfaderkennungsmodus unterstützen, Folgendes umfasst:
Bestimmen des Typs der zu erfassenden Erkennungsdaten; und
Bestimmen des Kopfknotens und des Endknotens in dem Erkennungspfad basierend auf Knoten, die sich in den mindestens zwei Knoten befinden, die den zu verwendenden Pfaderkennungsmodus unterstützen und deren Ankündigungspakete Typen von Erkennungsdaten angeben, die mit dem Typ der zu erfassenden Erkennungsdaten übereinstimmen.

4. Verfahren nach einem der Ansprüche bis 3, wobei
die an den Kopfknoten übermittelten OAM-Konfigurationsinformationen erste Konfigurationsanweisungen für die Zugriffskontrollliste (access control list - ACL) umfassen, wobei die ersten ACL-Konfigurationsanweisungen eine Kennung eines einzukapselnden Pakets und spezifischen, in das Paket eingekapselten Inhalt umfassen; und
die an den Endknoten übermittelten OAM-Konfigurationsinformationen zweite ACL-Konfigurationsanweisungen umfassen und die zweiten ACL-Konfigurationsanweisungen eine Kennung eines zu entkapselnden Pakets umfassen.

5. Verfahren zum Übermitteln von OAM-Konfigurationsinformationen zur Pfaderkennung, angewendet auf einen ersten Knoten in einem Kommunikationsnetzwerk, wobei das Kommunikationsnetzwerk einen Steuerknoten und eine Vielzahl von Knoten umfasst und der erste Knoten einer der Vielzahl von Knoten ist; und
das Verfahren Folgendes umfasst:
Senden eines Ankündigungspakets durch den ersten Knoten an den Steuerknoten, wobei das Ankündigungspaket Angabeinformationen umfasst, die zum Angeben eines vom ersten Knoten unterstützten Pfaderkennungsmodus verwendet werden, um es dem Steuerknoten zu ermöglichen, einen Erkennungspfad basierend auf dem Ankündigungspaket zu bestimmen;
wobei das Ankündigungspaket ferner Angabeinformationen umfasst, die zum Angeben eines Typs von Erkennungsdaten verwendet werden, der dem durch den ersten Knoten unterstützten Pfaderkennungsmodus entspricht;
wobei das Verfahren **dadurch gekennzeichnet ist, dass** das Ankündigungspaket ferner Angabeinformationen umfasst, die verwendet werden, um einen Typ eines Protokolls anzugeben, das verwendet wird, wenn ein Paketheader, der Anweisungen zur Datenerkennung trägt, in ein Paket eingekapselt wird, das zur Pfaderkennung dient.

6. Verfahren nach Anspruch 5, wobei das Ankündigungspaket ferner Angabeinformationen umfasst, die verwendet werden, um anzugeben, dass ein Typ des Ankündigungspakets ein Ankündigungspaket mit OAM-Kapazität ist.

7. Verfahren nach einem der Ansprüche 5 bis 6, wobei, wenn ein durch den ersten Knoten verwendetes Kommunikationsprotokoll ein Open Shortest Path First(OSPF)-Protokoll ist, das Ankündigungspaket ein Paket ist, das auf einem Router Information Link State Advertisement (RI LSA) basiert.

8. Verfahren nach einem der Ansprüche 5 bis 6, wobei, wenn ein durch den ersten Knoten verwendetes Kommunikationsprotokoll ein Intermediate System to Intermediate System(ISIS)-Protokoll ist, das Ankündigungspaket ein auf einem TLV 242 basierendes Paket ist.

9. Verfahren nach einem der Ansprüche 5 bis 6, wobei, wenn ein durch den ersten Knoten verwendetes Kommunikationsprotokoll ein Border Gateway(BGP)-Protokoll ist, das Ankündigungspaket ein auf einem opaken Knotenattribut TLV basierendes Paket ist.

10. Netzwerkvorrichtung, wobei die Netzwerkvorrichtung dazu konfiguriert ist, das Verfahren nach einem der Ansprüche 1 bis 9 umzusetzen.

11. System zum Übermitteln von OAM-Konfigurationsinformationen, wobei das System einen Steuerknoten und eine Vielzahl von Knoten umfasst, wobei
ein erster Knoten in der Vielzahl von Knoten dazu konfiguriert ist, das Verfahren nach einem der Ansprüche 5 bis 9 umzusetzen; und
der Steuerknoten dazu konfiguriert ist, das Verfahren nach einem der Ansprüche 1 bis 4 umzusetzen.

## Revendications

1. Procédé de fourniture d'informations de configuration OAM pour une détection de chemin, appliqué à un noeud de commande dans un réseau de communication, dans lequel le réseau de communication comprend en outre une pluralité de noeuds, et le procédé comprend :
l'obtention, par le noeud de commande, de paquets d'annonce envoyés par au moins deux de la pluralité de noeuds, dans lequel le paquet d'annonce comprend des informations d'indication utilisées pour indiquer un mode de détection de chemin pris en charge par l'expéditeur du paquet d'annonce ;
la détermination, par le noeud de commande, d'un chemin de détection sur la base d'un mode de détection de chemin qui doit être utilisé et des paquets d'annonce envoyés par les au moins deux noeuds ; et
la fourniture, par le noeud de commande, d'informations de configuration OAM à un noeud de tête et à un noeud de queue dans le chemin de détection ;
dans lequel la détermination, par le noeud de commande, d'un chemin de détection sur la base d'un mode de détection de chemin qui doit être utilisé et des paquets d'annonce envoyés par les au moins deux noeuds comprend :
la détermination du noeud de tête et du noeud de queue dans le chemin de détection sur la base de noeuds qui se trouvent dans les au moins deux noeuds et qui prennent en charge le mode de détection de chemin qui doit être utilisé ;
le procédé étant **caractérisé en ce que** le paquet d'annonce comprend en outre des informations d'indication utilisées pour indiquer un type de protocole utilisé lorsqu'un en-tête de paquet transportant des instructions de détection de données est encapsulé dans un paquet destiné à la détection de chemin ; et
avant la détermination du noeud de tête et du noeud de queue dans le chemin de détection sur la base de noeuds qui se trouvent dans les au moins deux noeuds et qui prennent en charge le mode de détection de chemin qui doit être utilisé, le procédé comprend en outre :
la détermination d'un type de protocole utilisé lorsqu'un en-tête de paquet transportant des instructions de détection de données est encapsulé dans le paquet destiné à la détection de chemin ; et
pour les noeuds dont les paquets d'annonce indiquent des types de protocoles qui sont cohérents avec le type de protocole déterminé, la réalisation de l'étape de détermination du noeud de tête et du noeud de queue dans le chemin de détection sur la base des noeuds qui se trouvent dans les au moins deux noeuds et
qui prennent en charge le mode de détection de chemin qui doit être utilisé.

2. Procédé selon la revendication 1, dans lequel le procédé comprend en outre : la détermination, par le noeud de commande, d'un ou plusieurs noeuds intermédiaires dans le chemin de détection sur la base des noeuds qui se trouvent dans les au moins deux noeuds et qui prennent en charge le mode de détection de chemin qui doit être utilisé ; et
la fourniture, par le noeud de commande, d'informations de configuration OAM au(x) nœud(s) intermédiaire(s) dans le chemin de détection.

3. Procédé selon la revendication 1 ou 2, dans lequel le paquet d'annonce comprend en outre des informations d'indication utilisées pour indiquer un type de données de détection correspondant au mode de détection de chemin pris en charge par l'expéditeur du paquet d'annonce ; et
la détermination du noeud de tête et du noeud de queue dans le chemin de détection sur la base de noeuds qui se trouvent dans les au moins deux noeuds et qui prennent en charge le mode de détection de chemin qui doit être utilisé comprend :
la détermination d'un type de données de détection qui doivent être collectées ; et
la détermination du noeud de tête et du noeud de queue dans le chemin de détection sur la base de noeuds qui se trouvent dans les au moins deux noeuds, qui prennent en charge le mode de détection de chemin qui doit être utilisé, et dont les paquets d'annonce indiquent des types de données de détection qui sont cohérents avec le type des données de détection qui doivent être collectées.

4. Procédé selon l'une quelconque des revendications 1 à 3, dans lequel
les informations de configuration OAM délivrées au noeud de tête comprennent des premières instructions de configuration de liste de contrôle d'accès, ACL, dans lequel les premières instructions de configuration ACL comprennent un identifiant d'un paquet à encapsuler et un contenu spécifique encapsulé dans le paquet ; et
les informations de configuration OAM délivrées au noeud de queue comprennent des secondes instructions de configuration ACL, et les secondes instructions de configuration ACL comprennent un identifiant d'un paquet à décapsuler.

5. Procédé de fourniture d'informations de configuration OAM pour une détection de chemin, appliqué à un premier noeud dans un réseau de communication, dans lequel le réseau de communication comprend un noeud de commande et une pluralité de noeuds, et le premier noeud est l'un de la pluralité de noeuds ; et
le procédé comprend :
l'envoi, par le premier noeud, d'un paquet d'annonce au noeud de commande, dans lequel le paquet d'annonce comprend des informations d'indication utilisées pour indiquer un mode de détection de chemin pris en charge par le premier noeud, pour permettre au noeud de commande de déterminer un chemin de détection sur la base du paquet d'annonce ;
dans lequel le paquet d'annonce comprend en outre des informations d'indication utilisées pour indiquer un type de données de détection correspondant au mode de détection de chemin pris en charge par le premier noeud ;
le procédé étant **caractérisé en ce que** le paquet d'annonce comprend en outre des informations d'indication utilisées pour indiquer un type de protocole utilisé lorsqu'un en-tête de paquet transportant des instructions de détection de données est encapsulé dans un paquet destiné à la détection de chemin.

6. Procédé selon la revendication 5, dans lequel le paquet d'annonce comprend en outre des informations d'indication utilisées pour indiquer qu'un type du paquet d'annonce est un paquet d'annonce à capacité OAM.

7. Procédé selon l'une quelconque des revendications 5 et 6, dans lequel lorsqu'un protocole de communication utilisé par le premier noeud est un protocole ouvrir d'abord le chemin le plus court, OSPF, le paquet d'annonce est un paquet basé sur une annonce d'état de liaison d'informations de routeur, RI LSA.

8. Procédé selon l'une quelconque des revendications 5 et 6, dans lequel lorsqu'un protocole de communication utilisé par le premier noeud est un protocole de système intermédiaire à système intermédiaire, ISIS, le paquet d'annonce est un paquet basé sur un TLV 242.

9. Procédé selon l'une quelconque des revendications 5 et 6, dans lequel lorsqu'un protocole de communication utilisé par le premier noeud est un protocole de passerelle frontalière, BGP, le paquet d'annonce est un paquet basé sur un attribut de noeud opaque TLV.

10. Dispositif de réseau, dans lequel le dispositif de réseau est configuré pour mettre en œuvre le procédé selon l'une quelconque des revendications 1 à 9.

11. Système de fourniture d'informations de configuration OAM, dans lequel le système comprend un noeud de commande et une pluralité de noeuds, dans lequel
un premier noeud parmi la pluralité de noeuds est configuré pour mettre en œuvre le procédé selon l'une quelconque des revendications 5 à 9 ; et
le noeud de commande est configuré pour mettre en œuvre le procédé selon l'une quelconque des revendications 1 à 4.
